# EUROPEAN PATENT APPLICATION

(11) **EP 2 924 923 A1**
(43) Date of publication of application: **30.09.2015**
(21) Application number: 14305415.3
(22) Date of filing: 24.03.2014
(51) Int. Cl.: H04L 12/58

(54) **Protection against suspect messages**

(71) Applicant: ALCATEL LUCENT, 92100 Boulogne-Billancourt (FR)
(72) Inventor: Martin, Antony, 91620 Nozay (FR); Papillon, Serge, 91620 Nozay (FR)
(74) Representative: Mouney, Jérôme

(57) **Abstract**

For a protection against suspect messages, an application server (AS) receiving messages that are to be sent toward users' mailboxes selects messages that embed at least one uniform resource locator (URL) and that are classified as suspect messages according to a maliciousness nature of the embedded URLs, rewrites original URLs of suspect messages into internal URLs that references internal resources that are hosted in a network server (NS) linked to the application server (AS), each original URL of a suspect message being associated with an internal URL, associates a counter with at least one rewritten URL of the suspect messages, and delivers suspect messages to users' mailboxes. Each time a user acknowledges the legitimate nature of a suspect message, the counter of an internal URL of said suspect message is incremented, and if the counter of the internal URL is above a given threshold, the internal URL is redirected towards a resource referenced by the original URL associated with the internal URL.

## Description

### FIELD OF THE INVENTION

The present invention pertains to the protection against suspect messages with embedded links. More particularly, the invention relates to a system for classifying and filtering suspect and malicious emails.

### BACKGROUND

The advent of global communications networks such as the Internet has presented commercial opportunities or reached vast numbers of potential customers. Electronic messaging, and particularly electronic mail ("email"), is becoming increasingly pervasive as a means for disseminating unwanted advertisements and promotions (also denoted as "spam") to network users.

One such example is unsolicited commercial messages, otherwise known as "spam". Spam is typically thought of as a message that is sent to a large number of recipients, such as to promote a product or service.

Message spamming is by far a source of security issues, associated costs (immediate and remediation) and loss of productivity (employees devices infection with malware, employees identity theft, employees data theft...). Message spamming is generally performed with malicious attachments and especially malicious links, like Uniform Resource Locators (URLs).

There is a need to have an efficient detection, classification and filtering mechanism of eMail SPAMs with malicious URLs in an enterprise environment.

### SUMMARY

This summary is provided to introduce concepts related to the present inventive subject matter. This summary is not intended to identify essential features of the claimed subject matter nor is it intended for use in determining or limiting the scope of the claimed subject matter.

In accordance with one embodiment, a method is provided for a protection against suspect messages, comprising the following steps in an application server receiving messages that are to be sent toward users' mailboxes:
selecting messages that embed at least one uniform resource locator (URL) and that are classified as suspect messages according to a maliciousness nature of the messages,
rewriting original URLs of a set of suspect messages into internal URLs that reference internal resources that are hosted in a network server linked to the application server, each original URL of a suspect message being associated with an internal URL,
associating a counter with at least one internal URL of each suspect message of said set of suspect messages,
delivering said set of suspect messages to users' mailboxes,
incrementing the counter of an internal URL of a suspect message when a user acknowledges the legitimate nature of the suspect message, wherein the user is redirected to a resource referenced by the internal URL when clicking on the internal URL and is asked for at least one generic question to further inspect the legitimate nature of the suspect message containing the internal URL,

if the counter of the internal URL is above a given threshold, redirecting the internal resource referenced by the internal URL towards a resource referenced by the original URL associated with the internal URL.

Advantageously, the invention provides a solution to filter SPAM mails, with a collaboration of users that still have possibility to access original mails.

In an embodiment, the counter of an internal URL of a suspect message is decremented when a user acknowledges the non legitimate nature of the suspect message.

In an embodiment, the messages are classified as suspect messages according to a maliciousness nature of the embedded URLs.

In an embodiment, if the user classifies by himself/herself the suspect message as legitimate, the network server redirects the user to the resource referenced by the original URL and the counter associated with the internal URL is incremented.

In an embodiment, if the user classifies by himself/herself the suspect message as non legitimate, the counter associated with the internal URL is decremented.

In an embodiment, visual warnings are added to the suspect message to warn user about the suspect nature of the suspect message.

In an embodiment, visual warnings are added to the suspect message to warn user about the suspect nature of the original URLs of the suspect message.

In an embodiment, the internal URLs of a suspect message are grouped into a cluster of URLs and stored in correspondence with an identifier of the cluster of URLs, the counter of a given internal URL is stored in correspondence with the identifier of the cluster including said given internal URL, and if the counter of said given internal URL is above a given threshold, all the internal URLs of the cluster including said given internal URL are redirected towards respective associated original URLs.

In an embodiment, a score is computed for each message, the score indicating a likelihood the message is a spam message.

In an embodiment, a message is classified as normal message, suspect message, or spam message depending on the computed score.

In an embodiment, the score is computed according to a first assessment according to which it is determined an amount of different text links within the message that are all pointing to the same URL, and according to a second assessment according to which it is determined a date of creation of the domain names related to URLs in the message.

In an embodiment, the score is computed according to a third assessment according to which it is determined a probability that similar recipients of similar messages received during a given time frame are not likely to interact with each other.

In an embodiment, the original URL of a suspect message is associated with a hyperlink under the form of text or image.

The invention also pertains to a server for a protection against suspect messages, the application server receiving messages that are to be sent toward users' mailboxes and comprising:
means for selecting messages that embed at least one uniform resource locator (URL) and that are classified as suspect messages according to a maliciousness nature of the embedded URLs,
means for rewriting original URLs of a set of suspect messages into internal URLs that reference internal resources that are hosted in a network server linked to the application server, each original URL of a suspect message being associated with an internal URL,
means for associating a counter with at least one internal URL of each suspect message of said set of suspect messages,
means for delivering said set of suspect messages to users' mailboxes,
means for incrementing the counter of an internal URL of a suspect message when a user acknowledges the legitimate nature of the suspect message, wherein the user is redirected to a resource referenced by the internal URL when clicking on the internal URL and is asked for at least one generic question to further inspect the legitimate nature of the suspect message containing the internal URL,
means for redirecting the internal resource referenced by the internal URL towards a resource referenced by the original URL associated with the internal URL, if the counter of the internal URL is above a given threshold.

The invention also pertains to computer program capable of being implemented within a server, said program comprising instructions which, when the program is executed within said server, carry out steps according to the method according to the invention.

### BRIEF DESCRIPTION OF THE FIGURES

The present invention and the benefits thereof shall be better understood upon examining the description below, which makes reference to the attached figures, in which:
- FIG. 1 is a schematic block diagram of a communication system according to one embodiment of the invention for a protection against suspect messages; and
- FIG. 2 is an algorithm of a method for a protection against suspect messages according to one embodiment of the invention.

The same reference number represents the same element or the same type of element on all drawings.

### DESCRIPTION OF EMBODIMENTS

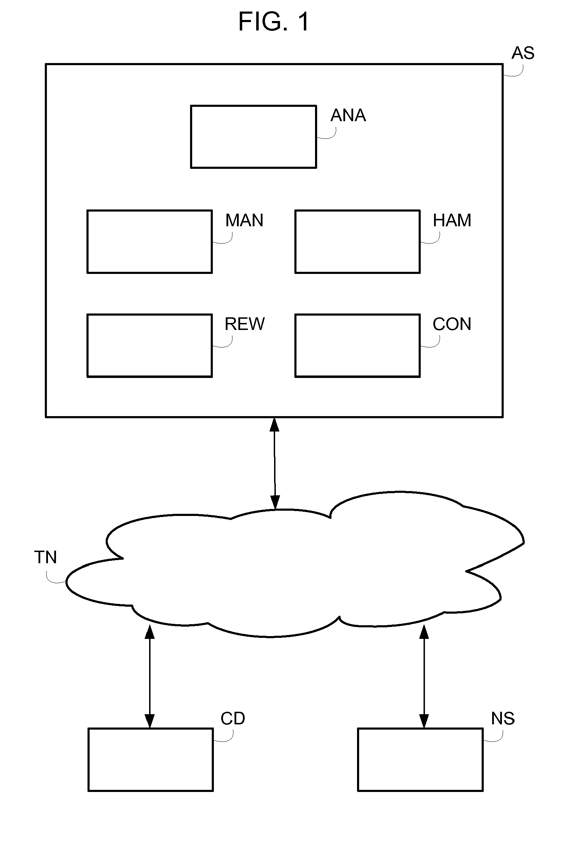

With reference to FIG. 1, a communication system according to the invention comprises a telecommunication network TN, an application server AS, a communication device CD and a network server NS, able to communicate between them through the telecommunication network.

The telecommunication network TN may be a wired or wireless network, or a combination of wired and wireless networks.

The telecommunication network TN can be a packet network, for example, an IP ("Internet Protocol") high-speed network such as the Internet or an intranet, or even a company-specific private network.

The application server AS is a mail server that serves as an electronic post office for email. It processes incoming mails before delivering them to users' mailboxes.

The communication device CD can be a personal computer or a laptop, an electronic tablet, a smart phone, a personal digital assistant, a set-top box, a residential gateway, a game console or a connected television, for instance. More generally it concerns any type of electronic equipment comprising a communication module, capable of establishing connection with at least one wired or wireless communication network to exchange data such as messages with other communication equipments.

The network server NS is an Internet proxy for example, linked to the application server AS and able to communicate directly with this latter.

The application server AS comprises an analyzing module ANA, a rewriting module REW, a management module MAN, a human analyzing module HAM and a configuration module CON.

The analyzing module ANA is able to perform an analysis of URLs metadata embedded in messages like emails, including the occurrence of the same links with different titles, an analysis of addresses degree of interaction. The analyzing module ANA determines different scores depending on analyses of URLs metadata and computes an aggregated score. It is assumed that an URL is a specific character string that constitutes a reference to a resource in the telecommunication network, hosted for example by a server.

The rewriting module REW rewrites original URLs of the messages that are likely to be SPAMs into URLs pointing to the network server NS.

The management module MAN generates and updates internal URLs based on the feedback collected via a "legitimate hit counter".

The human analyzing module ANA handles questions asked to users to assess the nature of suspect messages that are "likely to be SPAM" messages and gets the explicit request to get access to the original URLs.

The configuration module CON handles configuration of "legitimate hit counter" of messages that are likely to be SPAMs and corresponding thresholds.

The application server AS contains or is linked to a database DB containing URLs associated with a classification label "SPAM".

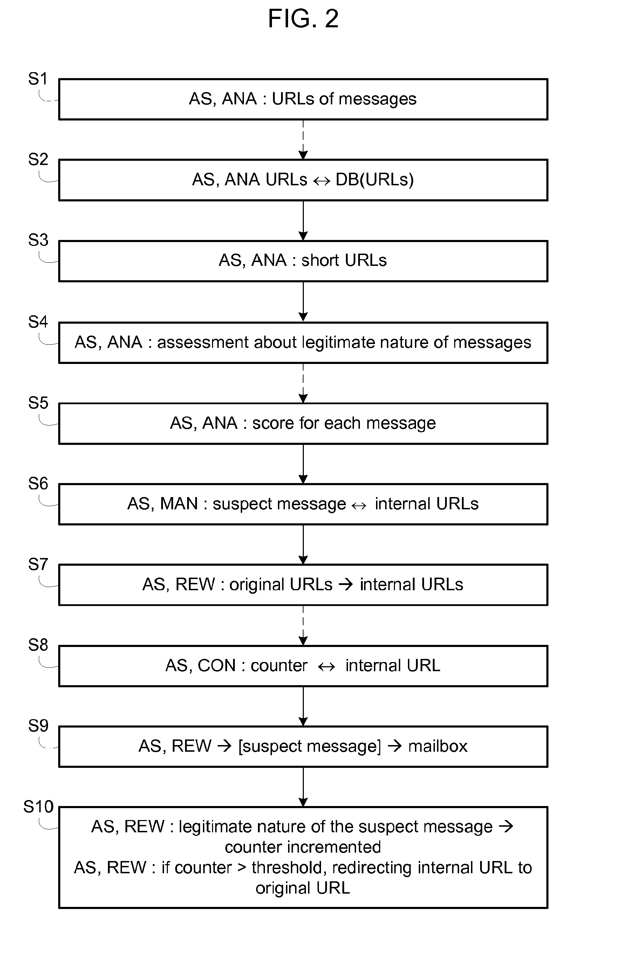

With reference to FIG. 2, a method for a protection against suspect messages according to one embodiment of the invention comprises steps S1 to S10 executed within the communication system.

Initially, messages are received and stored by the application server AS.

In step S1, the analyzing module ANA parses messages and selects messages embedding URLs, for example associated with hyperlinks under the form of text or image. The analyzing module ANA extracts the URLs embedded in the selected messages.

In step S2, the analyzing module ANA checks if there is any classification already available with the URLs extracted from the messages.

If the database DB contains similar URLs as the extracted URLs with a classification label "SPAM", then the messages are labeled as SPAMs.

In step S3, the analyzing module ANA checks if there are short URLs, meaning short text strings. If short URLs are found, they are dereferenced.

In step S4, at least three assessments are performed about the legitimate or suspect nature of the messages.

In a first assessment, the analyzing module ANA determines an amount of different text links within the message that represent the same hyperlink. If there are many different text links like "subscribe", "unsubscribe", "update"... that are all pointing to the very same URL, it is an indicator of maliciousness and the message is likely to be a SPAM attack.

In a second assessment, the analyzing module ANA determines the date of creation of the domain names related to each URL and the date of any record update obtained, via a Whois command for example. If the date of creation of the corresponding web site is from a few days (less than 5 days - duration configurable), it is likely that this is a malicious web site created only for the duration of the SPAM attack via the message.

In a third assessment, the analyzing module ANA groups similar messages received during a given timeframe, and extracts recipient addressees from these messages. The messages are considered identical if they contain identical text and/or URLs. The messages are grouped according to a likelihood of interaction between users having received the messages, using for example corporate social network and directories. If similar messages are received by users that are not likely to interact with each other, this is an indicator of maliciousness.

In step S5, the analyzing module ANA computes a score, named SPAM score, for each message, the score being an indicator of maliciousness.

If the score is beyond a given configurable threshold, the message is automatically labeled as SPAM.

At the end of this step, the messages are classified according to a maliciousness nature of the messages and according to three types of messages with the following labels:
- "normal messages": SPAM score below 20% for example - they are forwarded to the end-user mailbox as usual,
- "spam messages": SPAM score above 80% for example - they are forwarded to the end-user eMail SPAM Inbox folder as usual,
- "suspect messages" that are likely to be SPAMs: SPAM score between 20% and 80% for example - they have a specific treatment before being forwarded to the user mailbox as described hereinafter.

In one embodiment, the messages are classified according to a maliciousness nature of the embedded URLs, based on the scores related to the assessments concerning the embedded URLs.

In step S6, the management module MAN selects the suspect messages that are likely to be SPAMs and creates an internal URL for each original URL of the suspect messages, each internal URL addressing a resource in the network server NS that is for example an Intranet server. Thus, each original URL is associated with an internal URL and is stored in correspondence with the associated internal URL in the application server.

In step S7, the rewriting module REW rewrites the original URLs of the suspect messages and replaces them by the corresponding internal URLs that reference internal resources that are hosted in a network server NS. Textual and visual warnings about the suspicious nature of the message are added in the suspect message. More especially, visual warnings can be added to the suspect message to warn user about the suspect nature of the original URLs of the suspect message. For each suspect message, the internal URLs are grouped into a cluster of URLs and stored in correspondence with an identifier IdC of the cluster of URLs.

In step S8, the configuration module CON associates a counter, called "legitimate hit counter", with each URL of the suspect messages. The counter of a rewritten URL is stored in correspondence with the identifier IdC of the cluster including the rewritten URL.

Per nature, a suspect message has different versions as it is sent to different recipients, but all the different versions of the suspect message can be identical from URL perspective.

An URL can be present in different clusters of URLs as similar suspect messages can contain different URLs but some URLs in common.

In step S9, the rewriting module REW delivers the suspect messages to users' mailboxes.

In step S10, a user of a communication device CD accesses the mailbox and opens a rewritten suspect message. The user is warned about the potential danger via the textual and visual warnings.

If the user decides to click on a rewritten URL, there is a transparent check performed in the background to assess the value of the "legitimate hit counter" associated with the URL.

If the "legitimate hit counter" is below a given threshold (i.e. a few people has considered the suspect message as legitimate that is therefore more likely to be a SPAM), the user is redirected to a resource referenced by the internal URL when clicking on the internal URL and is asked for at least one generic question to further inspect the legitimate nature of the suspect message by the human analyzing module HAM.

The questions can be related to the criteria on which the assessments were based. For example, a question can be the following:
"Your message contain different links like subscribe", "unsubscribe", "update"... that are all pointing to the very same URL, your message is likely to be a SPAM attack. Do you think the links are legitimate?" or "The link on which you clicked corresponds to a domain name created a few days ago, do you trust this link?" or "Do you think your message is a SPAM?".

If the user acknowledges the legitimate nature of the suspect message, the counter of the internal URL is incremented.

If the user acknowledges the non legitimate nature of the suspect message, the counter of the internal URL is decremented.

If the user classifies by himself/herself the message as legitimate, the human analyzing module HAM redirects the user to the original URL and the "legitimate hit counter" is incremented.

If the user classifies by himself/herself the message as non legitimate, the "legitimate hit counter" is decremented.

If the "legitimate hit counter" is above a given threshold (i.e. a sufficient amount of people has clicked and acknowledged the fact that the message is not a SPAM), the user is redirected from the network server NS to the original URLs when clicking on the links associated with the internal URLs of the suspect message.

Related internal URLs on the network server are redirected to the original URLs that were removed from the suspect message, and no questions are asked anymore.

More especially, when the "legitimate hit counter" associated with a internal URL is above a given threshold, the suspect message containing the

URL is considered as legitimate and all URLs in the cluster containing the internal URL are also considered as legitimate. Thus, the "legitimate hit counter" associated with each URL of the cluster is set above the corresponding threshold. All the internal URLs, in the same cluster, on the network server are redirected towards the respective associated original URLs.

If the "legitimate hit counter" value is above the threshold, the rewriting of upcoming messages with the exact same URLs is done differently, with:
- different URLs with text and visual warning that warn but mention that other people have considered this suspect message as legitimate anyway;
- different internal URLs to log the amount of people going through the URLs without going through the step of answering questions before actually getting access to the Internet content.

If a message already rewritten is delivered to user's mailbox but not yet loaded by user from the mailbox, and if a sufficient amount of users has acknowledge the legitimate nature of the suspect message and that the "legitimate hit counter" value is above the threshold before the message is loaded by user from the mailbox, text and visual warnings are transparently changed so that when the message is loaded by user from the mailbox, there is still a warning but also a note that other people have considered this message as legitimate anyway.

Optionally, before being redirected, there are some configurations and checks that are done to reduce the likelihood of the user communication device infection:
- the Internet proxy is temporarily and specifically configured in an aggressive mode for these particular links, meaning that the filtering will be more strict for these particular links,
- ahead of the end-user, a request of the links is done, the content of the web pages is parsed and all the plugins requested in the web pages are listed,
- either local (to the user communication device) or distant, there is a checking of the user browser and plugins versions (following the input of the previous step) and an update enforcement if there are not up to date prior to the browsing.

The invention described here relates to a method and a server for a protection against suspect messages. According to one implementation of the invention, steps of the invention are determined by the instructions of a computer program incorporated into a server, such as the application server. The program comprises program instructions which, when said program is loaded and executed within the server, carry out the steps of the method.

Consequently, the invention also applies to a computer program, particularly a computer program on or within an information medium, suitable to implement the invention. This program may use any programming language, and be in the form of source code, object code, or intermediate code between source code and object code, such as in a partially compiled form, or in any other form desirable for implementing the method according to the invention.

## Claims

1. A method for a protection against suspect messages, comprising the following steps in an application server (AS) receiving messages that are to be sent toward users' mailboxes:
selecting (S6) messages that embed at least one uniform resource locator (URL) and that are classified as suspect messages according to a maliciousness nature of the messages,
rewriting (S7) original URLs of a set of suspect messages into internal URLs that reference internal resources that are hosted in a network server (NS) linked to the application server (AS), each original URL of a suspect message being associated with an internal URL,
associating (S8) a counter with at least one internal URL of each suspect message of said set of suspect messages,
delivering (S9) said set of suspect messages to users' mailboxes,
incrementing (S10) the counter of an internal URL of a suspect message when a user acknowledges the legitimate nature of said suspect message, wherein the user is redirected to a resource referenced by the internal URL when clicking on the internal URL and is asked for at least one generic question to further inspect the legitimate nature of the suspect message containing the internal URL,
if the counter of the internal URL is above a given threshold, redirecting (S10) the internal resource referenced by the internal URL towards a resource referenced by the original URL associated with the internal URL.

2. A method according to claim 1, wherein the counter of an internal URL of the suspect message is decremented when a user acknowledges the non legitimate nature of the suspect message.

3. A method according to claim 1 or 2, wherein the messages are classified as suspect messages according to a maliciousness nature of the embedded URLs.

4. A method according to any of claims 1 to 3, wherein, if the user classifies by himself/herself the suspect message as legitimate, the network server (NS) redirects the user to the resource referenced by the original URL and the counter associated with the internal URL is incremented.

5. A method according to any of claims 1 to 4, wherein, if the user classifies by himself/herself the suspect message as non legitimate, the counter associated with the internal URL is decremented.

6. A method according to any of claims 1 to 5, wherein visual warnings are added to the suspect message to warn user about the suspect nature of the suspect message.

7. A method according to claim 6, wherein visual warnings are added to the suspect message to warn user about the suspect nature of the original URLs of the suspect message.

8. A method according to any of claims 1 to 7, wherein the internal URLs of a suspect message are grouped into a cluster of URLs and stored in correspondence with an identifier (IdC) of the cluster of URLs, the counter of a given internal URL is stored in correspondence with the identifier (IdC) of the cluster including said given internal URL, and if the counter of said given internal URL is above a given threshold, all the internal URLs of the cluster including said given internal URL are redirected towards respective associated original URLs.

9. A method according to any of claims 1 to 8, wherein a score is computed for each message, the score indicating a likelihood the message is a spam message.

10. A method according to claim 9, wherein a message is classified as normal message, suspect message, or spam message depending on the computed score.

11. A method according to claim 10, wherein the score is computed according to a first assessment according to which it is determined an amount of different text links within the message that are all pointing to the same URL, and according to a second assessment according to which it is determined a date of creation of the domain names related to URLs in the message.

12. A method according to claim 10 or 11, wherein the score is computed according to a third assessment according to which it is determined a probability that similar recipients of similar messages received during a given time frame are not likely to interact with each other.

13. A method according to any of claims 1 to 12, wherein the original URL of a suspect message is associated with a hyperlink under the form of text or image.

14. An application server (AS) for a protection against suspect messages, the application server (AS) receiving messages that are to be sent toward users' mailboxes and comprising:
means (MAN) for selecting messages that embed at least one uniform resource locator (URL) and that are classified as suspect messages according to a maliciousness nature of the embedded URLs,
means (REW) for rewriting original URLs of a set of suspect messages into internal URLs that reference internal resources that are hosted in a network server (NS) linked to the application server (AS), each original URL of a suspect message being associated with an internal URL,
means (CON) for associating a counter with at least one internal URL of each suspect message of said set of suspect messages,
means (ANA) for delivering said set of suspect messages to users' mailboxes,
means (REW) for incrementing the counter of an internal URL of a suspect message when a user acknowledges the legitimate nature of said suspect message, wherein the user is redirected to a resource referenced by the internal URL when clicking on the internal URL and is asked for at least one generic question to further inspect the legitimate nature of the suspect message containing the internal URL,
means (HAM) for redirecting the internal resource referenced by the internal URL towards a resource referenced by the original URL associated with the internal URL, if the counter of the internal URL is above a given threshold.

15. A computer program capable of being implemented within an application server (AS1) for a protection against suspect messages, application server (AS1) receiving messages that are to be sent toward users' mailboxes, said program comprising instructions which, when the program is loaded and executed within said server (AS), carry out the following steps:
selecting (S6) messages that embed at least one uniform resource locator (URL) and that are classified as suspect messages according to a maliciousness nature of the embedded URLs,
rewriting (S7) original URLs of a set of suspect messages into internal URLs that reference internal resources that are hosted in a network server (NS) linked to the application server (AS), each original URL of a suspect message being associated with an internal URL,
associating (S8) a counter with at least one internal URL of each suspect message of said set of suspect messages,
delivering (S9) said set of suspect messages to users' mailboxes,
incrementing (S10) the counter of an internal URL of a suspect message when a user acknowledges the legitimate nature of said suspect message, wherein the user is redirected to a resource referenced by the internal URL when clicking on the internal URL and is asked for at least one generic question to further inspect the legitimate nature of the suspect message containing the internal URL,
if the counter of the internal URL is above a given threshold, redirecting (S10) the internal resource referenced by the internal URL towards a resource referenced by the original URL associated with the internal URL.
